# EUROPÄISCHE PATENTANMELDUNG

(11) **EP 1 176 358 A2**
(43) Veröffentlichungstag der Anmeldung: **30.01.2002**
(21) Anmeldenummer: 01000313.5
(22) Anmeldetag: 23.07.2001
(51) Int. Cl.: F21S 8/10, F21V 8/00, F21V 9/00

(54) **Beleuchtungssystem und -verfahren sowie Fahrzeug mit einem Beleuchtungssystem**

(30) Priorität: 26.07.2000 DE 10036300
(71) Anmelder: Philips Corporate Intellectual Property GmbH, 52064 Aachen (DE); Koninklijke Philips Electronics N.V., 5621 BA Eindhoven (NL)
(72) Erfinder: Tiesler-Wittig, Helmut, Habsburgerallee 11, 52064 Aachen (DE)
(74) Vertreter: Volmer, Georg, Dipl.-Ing.

(57) **Zusammenfassung**

Um die Vorteile eines zentralisierten Lichtsystems zu nutzen, wird ein betriebssicheres Beleuchtungssystem vorgeschlagen, das wenigstens eine optische Faser zur Weiterleitung zumindest eines Teils des Lichts der Lichtquellen zu wenigstens einer Lichtaustrittsstelle aufweist, wobei eine der Lichtquellen eine Hochleistungs-Gasentladungslampe, insbesondere eine Xenon-Lampe, und die andere eine Halogenlampe ist.

## Beschreibung

Die Erfindung betrifft ein Beleuchtungssystem und -verfahren sowie ein Fahrzeug mit einem Beleuchtungssystem, bei welchen jeweils wenigstens eine optische Faser zur Weiterleitung des von einer Lichtquelle erzeugten Lichts an einen Lichtaustrittsort bzw. unterschiedliche Lichtaustrittsorte vorgesehen ist bzw. verwendet wird.

Solche Systeme und Verfahren sind bekannt, z.B. aus der EP 0 501 669 A2. Sie sollen insbesondere bei motorgetriebenen Landfahrzeugen wie Automobilen die wartungsunfreundlichen, anfälligen herkömmlichen Beleuchtungssysteme mit einer Vielzahl einzelner Lichtquellen durch ein wartungsfreundliches System ersetzen, bei dem das Licht einer einzigen starken Lichtquelle mittels optischer Fasern in der gewünschten Weise verteilt, also z.B. zum linken und rechten Frontscheinwerfer und ggf. zu den Heckleuchten geleitet wind.

Während ein zentralisiertes Beleuchtungssystem gegenüber den Systemen mit einer Vielzahl einzelner Lichtquellen eine Reihe von Vorteilen besitzt, benötigt ein solches System zur Erzeugung der z.B. für das Fernlicht eines Kraftfahrzeugs ausreichenden Beleuchtungsstärke eine Hochleistungslichtquelle, wobei sich insbesondere Hochleistungs-Gasentladungslampen mit kurzem Lichtbogen wie z.B. Xenon-Lampen bewährt haben. Solche Hochleistungs-Gasentladungslampen zeigen aber nachteilig ein charakteristisches Anlaufverhalten und stellen nicht sofort die z.B. beim Fernlicht oder beim Betätigen der sogenannten "Lichthupe" benötigte Lichtleistung zur Verfügung. Ein weiterer großer Nachteil der bekannten Systeme mit einer einzigen Hochleistungs-Gasentladungslampe ist, dass bei Ausfall dieser Lampe, die zwar je nach Ausgestaltung des Beleuchtungssystems leicht zu wechseln sein kann, bis zum Auswechseln der Lampe überhaupt kein Licht zur Verfügung steht, was z.B. bei Nachtfahrten ein erhebliches Sicherheitsrisiko darstellt.

Aus der US 5,526,237 ist ein Beleuchtungssystem bekannt, bei dem zwei HochleistungsGasentladungslampen zur Erhöhung der Lichtintensität eingesetzt werden. Sollte eine der Lampen ausfallen, stünde bei diesem System immerhin noch das Licht der zweiten Hochleistungs-Gasentladungslampe zur Verfügung Da jedoch beide Gasentladungslampen das genannte nachteilige Anlaufverhalten zeigen, ist ein solches System nur bedingt bei Kraftfahrzeugen einsetzbar. Da zudem Hochleistungs-Gasentladungslampen eine im Vergleich zu Lampen anderer Bauart kurze Lebensdauer haben, besteht die Gefahr, dass bei Verwendung zweier Hochleistungs-Gasentladungslampen gemäß der Lehre der genannten US-Patentschrift beide Lampen kurz nacheinander ausfallen.

In der EP 0 183 921 A2 wird in der Beschreibungseinleitung ein Beleuchtungssystem zur Verwendung bei einem Solarsimulator erwähnt, bei dem das Licht einer Hochleistungs-Gasentladungslampe, nämlich einer Xenon-Lampe, und einer Halogen-Glühlampe miteinander kombiniert werden, um die Spektralverteilung des Sonnenlichts möglichst exakt zu simulieren. Solche Solarsimulatoren dienen insbesondere zum Testen von Solarzellen und werden dementsprechend nur in Forschungslaboren eingesetzt. Das Licht der beiden Lampen soll dabei in genau gesteuerter Weise so kombiniert werden, dass sich die gewünschte Spektralverteilung ergibt. Das Licht wird dann flächig auf eine zu testende Probe, z.B. einer Solarzelle eingestrahlt.

Davon ausgehend liegt der Erfindung die Aufgabe zugrunde, ein Beleuchtungssystem und -verfahren sowie ein Kraftfahrzeug mit einem Beleuchtungssystem anzugeben, bei welchem die Vorteile eines zentralisierten Lichtsystems genutzt werden, bei dem an einer Stelle Licht erzeugt und über optische Fasern zu wenigstens einer Lichtaustrittsstelle, also z.B. zu den Front- und Heckleuchten eines Kraftfahrzeugs, geleitet wird

Die Aufgabe wird gelöst von einem Beleuchtungssystem insbesondere für Fahrzeuge mit wenigstens zwei Lichtquellen und wenigstens einer optischen Faser, in welche das Licht der beiden Lichtquellen zur Weiterleitung zumindest eines Teils des Lichts der Lichtquellen zu wenigstens einer Lichtaustrittsstelle eingeleitet wird, wobei eine der Lichtquellen eine Hochleistungs-Gasentladungslampe, insbesondere eine Xenon-Lampe, und eine der Lichtquellen eine Halogenlampe ist. Dabei hat die Halogenlampe gegenüber der Hochleistungs-Gasentladungslampe den großen Vorteil, innerhalb von Sekundenbruchteilen nach dem Einschalten ihre maximale Leistung zur Verfügung zu stellen. Zudem hat die Halogenlampe gegenüber einer Hochleistungs-Gasentladungslampe eine deutlich höhere Lebenszeit.

Diese Anordnung eignet sich insbesondere im Zusammenwirken mit mindestens zwei Lichtaustrittsstellen bzw. mit mindestens zwei Fasern, wie dieses bei Kraftfahrzeugen der Fall ist.

Bei einer vorteilhaften Ausführungsform der Erfindung ist vorgesehen, dass der Anteil der Hochleistungs-Gasentladungslampe an der Gesamtlichtleistung des Systems weniger als 90 %, vorzugsweise zwischen 75 und 85 % beträgt. Der Anteil der Halogenlampe an der Gesamtlichtleistung des Systems sollte dementsprechend vorzugsweise mehr als 10 %, vorzugsweise zwischen 15 und 25 % betragen. Dies gewährleistet bei Ausfall der Hochleistungs-Gasentladungslampe eine z.B. für Nachtfahrten mit einem Kraftfahrzeug ausreichende Beleuchtungsstärke. Zudem kann ein solches System dann vorteilhaft so betrieben werden, dass die Halogenlampe während der Fahrt eines mit einem solchen Beleuchtungssystems ausgestatteten Landfahrzeugs permanent eingeschaltet bleibt, was erwiesenermaßen zur Verkehrssicherheit beiträgt.

Hinsichtlich eines Fahrzeugs wird die genannte Aufgabe gelöst von einem Fahrzeug, insbesondere einem motorgetriebenen Landfahrzeug wie z.B. einem PKW oder LKW, mit einem derartigen Beleuchtungssystem.

Verfahrensmäßig wird die genannte Aufgabe gelöst von einem Beleuchtungsverfahren, insbesondere zur Verwendung bei Fahrzeugen, wobei das Licht wenigstens zweier Lichtquellen zumindest partiell in wenigstens eine optische Faser eingespeist und mittels der Faser zu wenigstens einer Lichtaustrittsstelle geleitet wird und wobei eine Halogenlampe und eine Hochleistungs-Gasentladungslampe, insbesondere eine Xenon-Lampe, als Lichtquellen verwendet werden.

Hierbei kann zur Erzielung eines ersten Beleuchtungszustandes nur das Licht der Halogenlampe zumindest partiell in die optischen Fasern geleitet und zur Erzielung eines zweiten Beleuchtungszustandes das Licht der Halogenlampe und der Hochleistungs-Gasentladungslampe zumindest partiell in die optischen Fasern geleitet werden.

Vorzugsweise kann das Licht der beiden Lichtquellen über wenigstens einen Strahlteiler in die optische Faser geleitet werden. Hierzu ist der Strahlteiler in geeigneter Weise in dem Strahlengang der beiden Lichtquellen anzuordnen.

Hierbei ist der Strahlteiler vorzugsweise wellenlängenselektiv gewählt und derart angeordnet, dass er nach Möglichkeit die hohen Infrarot (IR)-Anteile bzw. Ultraviolett (UV)-Anteile der Halogenlampe ausfiltert und nicht in die Faser einleitet. Wird somit das Licht der Halogenlampe von dem Strahlteiler reflektiert in die Faser eingeleitet, so sollte der Strahlteiler durchlässig für sichtbares Licht und reflektiv für IR- und UV-Licht gewählt sein. Hierdurch ist gewährleistet, dass das sichtbare Licht der Hochleistungs-Gasentladungslampe zu wesentlichen Anteilen in die Faser gelangt. Wird andererseits das Licht der Halogenlampe durch den Strahlteiler hindurch in die Faser und das Licht der Hochleistungs-Gasentladungslampe von dem Stahlteiler reflektiert in die Faser eingeleitet, sollte der Strahlteiler vorzugsweise durchlässig für IR- und UV-Licht und reflektiv für sichtbares Licht gewählt werden, sodass auch bei dieser Anordnung der Großteil des sichtbaren Lichts der Hochleistungs-Gasentladungslampe in die Fasern eingeleitet wird. Bei einer derartigen Anordnung ist es möglich, die Lichtausbeute zu maximieren. Es versteht sich, dass ein derartig wellenlängenselektiver Stahlteiler auch unabhängig von der Einkopplung des Lichts in eine optische Faser vorteilhaft zur Anwendung bei einem Beleuchtungssystem kommen kann.

Üblicherweise verlässt einen Stahlteiler neben dem Primärstrahl, welcher beispielsweise in die Faser geleitet wird, noch ein Sekundärstrahl. Ein derartiger Sekundärstrahl wäre normalerweise für das Beleuchtungssystem verloren. Aus diesem Grunde wird vorgeschlagen, dass ein Reflektor vorgesehen ist, der diesen Sekundärstrahl zurück auf den Strahlteiler wirft, sodass zumindest Teile des Sekundärstrahls genutzt werden können. Da das Beleuchtungssystem insbesondere mit sichtbarem Licht arbeitet, sollte dieser Reflektor zumindest für sichtbares Licht reflektiv ausgestaltet sein.

Alternativ bzw. kumulativ kann der Sekundärstrahl auf einen Absorber für UV- bzw. IR-Licht geleitet werden, sodass dieses nicht zurück in das Beleuchtungssystem reflektiert wird und dieses unnötig aufheizt.

Es versteht sich, das ein derartiger Reflektor bzw. ein derartiger Absorber auch unabhängig von einer Faser bzw. unabhängig von einem wellenlängenselektiven Stahlteiler vorteilhaft die Energieausbeute erhöht bzw. ein Überhitzen des Beleuchtungssystems verhindert.

Vorzugsweise reflektiert der Reflektor den Sekundärstrahl fokussierend zu wenigstens einer der beiden Lichtquellen. Hierbei kann der Fokus neben der eigentlichen Lichtquelle in einem diese Lichtquelle umgebenden Reflektor vorgesehen sein, wie dieses bereits bei Fahrzeugreflektoren der Stand der Technik ist, sodass die Lichtquelle ein Rücksenden des fokussierten Sekundärstrahls durch den Lichtquellenreflektor auf den Strahlteiler nicht behindert.

Darüber hinaus kann das Beleuchtungssystem auch einen schaltbaren Spiegel vorsehen, der wahlweise Licht aus der ersten Lichtquelle und/oder Licht aus der zweiten Lichtquelle in die Faser einleitet. Auch bei einer derartigen Anordnung lässt sich die erfindungsgemäße Redundanz realisieren. Ein derartiger schaltbarer Spiegel ist an sich bekannt und wird beispielsweise elektrisch angeregt.

Es versteht sich, dass ein derartiger schaltbarer Spiegel auch halbdurchlässig - wie ein Strahlteiler - ausgebildet sein kann, sodass ein entsprechender Strahlteiler in geeigneter Weise angesteuert und reflektiv bzw. durchlässig für bestimmte Wellenlängenbereiche gewählt werden kann.

Als Schaltanlass kann je nach gewünschter Ausgestaltung einerseits die Aufwärmphase der Hochleistungs-Gasentladungslampe bzw. andererseits deren Ausfall genutzt werden.
Es versteht sich, dass ein derartiger schaltbarer Spiegel auch unabhängig von der Einleitung des Lichts in eine optische Faser vorteilhaft für ein erfindungsgemäßes Beleuchtungssystem zur Anwendung kommen kann.

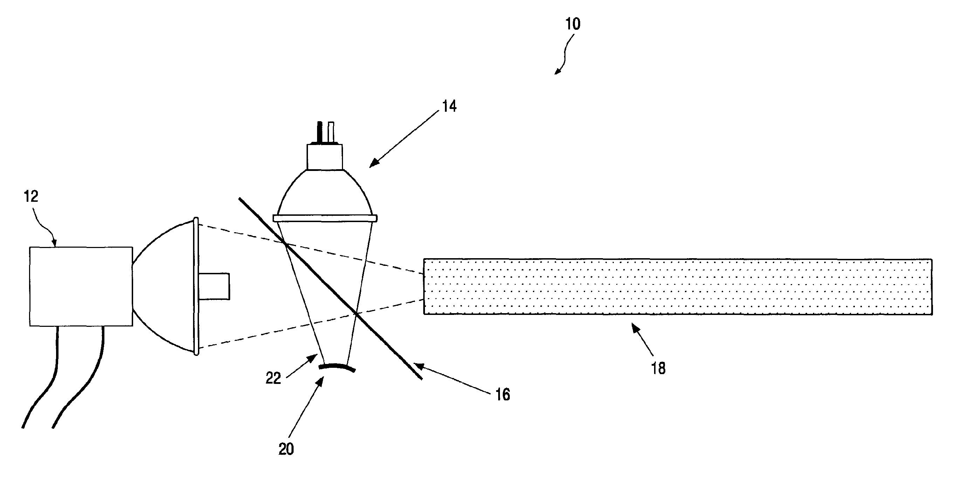

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung, deren einzige Figur schematisch den Einspeisungsteil eines erfindungsgemäßen Beleuchtungssystems mit zwei Lichtquellen zeigt.

In der Figur ist der einspeisungsseitige, in seiner Gesamtheit mit 10 bezeichnete Teil eines erfindungsgemäßen Beleuchtungssystems z.B. zur Verwendung bei einem Automobil gezeigt. Er umfasst eine erste Lichtquelle, nämlich eine Hochleistungs-Gasentladungslampe in Form einer Xenon-Lampe 12, sowie eine zweite Lichtquelle in Form einer HalogenGlühlampe 14, die so angeordnet sind, dass ihr Licht zumindest zum größten Teil - bei diesem Ausführungsbeispiel unter Zwischenschaltung eines Strahlteilers 16 - in ein hier nur schematisch angedeutetes Bündel optischer Fasern 18 eingeleitet werden kann.

Das an sich bekannte Bündel optischer Fasern 18 teilt sich dann in hier nicht weiter gezeigter Weise auf, so dass die Fasern an unterschiedlichen Stellen, z.B. in den vorderen und hinteren Leuchten eines Kraftfahrzeugs, enden, wo das in die Fasern eingeleitete Licht aus den Fasern austreten und ggf. unter Zwischenschaltung weiterer optischer Hilfsmittel wie z.B. Linsen und Reflektoren zur Beleuchtung dienen kann.

Als besonders vorteilhaft hat es sich dabei erwiesen, wenn die Lampen 12 und 14 hinsichtlich ihrer Leistung so gewählt werden, dass die Hochleistungs-Gasentladungslampe zu weniger als ungefähr 80 % der Gesamtlichtleistung beiträgt.

Während des Betriebs des Systems steht Dank der Halogenlampe 14 sofort Licht zur Verfügung. Sollte die Hochleistungs-Gasentladungslampe ausfallen, steht als redundante Lichtquelle im Regelfall immer noch die Halogenlampe 14 zur Verfügung, deren Lebenserwartung höher ist als die üblicher Hochleistungs-Gasentladungslampen.
Bei Verwendung eines solchen Beleuchtungssystems bei Landfahrzeugen kann die Halogenlampe 14 für das in manchen nordischen Ländern bereits vorgeschriebene und zur Verkehrssicherheit beitragende permanente Abblendlicht verwendet werden und ständig leuchten.

Der Strahlteiler 16 arbeitet mit einem wellenlängenselektiven Spiegel 20 zusammen, welcher sichtbares Licht reflektiert und UV- bzw. IR-Licht durchlässt. Auf diese Weise wird nutzbares Licht, welches den Strahlteiler 16 in einem Sekundärstrahl 22 verlässt, wieder reflektiert und steht dem Beleuchtungssystem zur Verfügung Hierbei ist der Fokus derart auf den Strahlteiler 16 sowie die Reflektoren der Lichtquellen 12, 14 abgestimmt, dass der Brennpunkt des reflektierten Sekundärstrahls 22 jeweils nicht unmittelbar auf die Lichtquellen selbst fällt, sodass dieses Licht weitgehend ungehindert von den Reflektoren der Lichtquellen 12, 14 wieder auf den Strahlteiler 16 reflektiert werden kann und hierdurch die Gesamtlichtausbeute erhöht wird Eine Abweichung dieser Art, die letztlich in einer breiteren Lichtquelle resultiert, wird durch die Faser 18 kompensiert.

## Patentansprüche

1. Beleuchtungssystem, insbesondere für Fahrzeuge, mit wenigstens zwei Lichtquellen (12, 14) und wenigstens einer optischen Faser (18), in welche das Licht der beiden Lichtquellen wenigstens teilweise eingeleitet wird, zur Weiterleitung zumindest eines Teils des Lichts der Lichtquellen zu wenigstens einer Lichtaustrittsstelle, wobei eine der Lichtquellen eine Hochleistungs-Gasentladungslampe (12), insbesondere eine Xenon-Lampe, und wobei eine der Lichtquellen eine Halogenlampe (14) ist.

2. Beleuchtungssystem nach Anspruch 1,
**dadurch gekennzeichnet,**
**dass** der Anteil der Hochleistungs-Gasentladungslampe (12) an der Gesamtlichtleistung des Systems weniger als 90 %, vorzugsweise zwischen 75 und 85 %, beträgt.

3. Beleuchtungssystem nach Anspruch 1 oder 2,
**dadurch gekennzeichnet,**
**dass** der Anteil der Halogenlampe (14) an der Gesamtlichtleistung des Systems mehr als 10 %, vorzugsweise zwischen 15 und 25 %, beträgt.

4. Beleuchtungssystem nach einem der Ansprüche 1 bis 3,
**dadurch gekennzeichnet,**
**dass** wenigstens ein Strahlteiler (16) derart in dem Strahlengang der beiden Lichtquellen (12, 14) angeordnet ist, dass das eingeleitete Licht von den Lichtquellen (12, 14) aus über den Strahlenteiler (16) in die Faser (18) geleitet wird.

5. Beleuchtungssystem nach Anspruch 4,
**dadurch gekennzeichnet,**
**dass** der Strahlteiler (16) wellenlängenselektiv gewählt ist.

6. Beleuchtungssystem nach Anspruch 5,
**dadurch gekennzeichnet,**
**dass** das eingeleitete Licht der Hochleistungs-Gasentladungslampe (12) durch den Strahlteiler (16) hindurch in die Faser (18) und das eingeleitete Licht der Halogenlampe (14) von dem Strahlteiler (16) reflektiert in die Faser (18) eingeleitet wird, wobei der Strahlteiler (16) durchlässig für sichtbares Licht und reflektiv für IR- und UV-Licht gewählt ist.

7. Beleuchtungssystem nach Anspruch 5,
**dadurch gekennzeichnet,**
**dass** das eingeleitete Licht der Halogenlampe (14) durch den Strahlteiler (16) hindurch in die Faser (18) und das eingeleitete Licht der Hochleistungs-Gasentladungslampe (12) von dem Strahlteiler (16) reflektiert in die Faser (18) eingeleitet wird, wobei der Strahlteiler (16) durchlässig für IR- und UV-Licht und reflektiv für sichtbares Licht gewählt ist.

8. Beleuchtungssystem nach einem der Ansprüche 4 bis 7,
**dadurch gekennzeichnet,**
**dass** ein den Strahlteiler (16) verlassender Sekundärstrahl (22) auf einen Reflektor (20) für sichtbares Licht und/oder auf einen Absorber (20) für UV- bzw. IR-Licht geleitet wird.

9. Beleuchtungssystem nach Anspruch 8,
**dadurch gekennzeichnet,**
**dass** der Reflektor (20) den Sekundärstrahl (22) fokussierend zu wenigstens einer der beiden Lichtquellen (12, 14) reflektiert.

10. Beleuchtungssystem nach einem der Ansprüche 1 bis 9,
**gekennzeichnet durch** einen schaltbaren Spiegel, der wahlweise Licht aus der ersten Lichtquelle (12) und/oder Licht aus der zweiten Lichtquelle (14) in die Faser (18) einleitet.

11. Beleuchtungsverfahren, insbesondere zur Verwendung bei Fahrzeugen, bei welchem das Licht wenigstens zweier Lichtquellen zumindest partiell in wenigstens eine optische Faser eingespeist und mittels der Faser zu wenigstens einer Lichtaustrittsstelle geleitet wird, wobei eine Halogenlampe und eine Hochleistungs-Gasentladungslampe, insbesondere eine Xenon-Lampe, als Lichtquellen verwendet werden.

12. Beleuchtungsverfahren nach Anspruch 11, wobei zur Erzielung eines ersten Beleuchtungszustandes nur das Licht der Halogenlampe zumindest partiell in die optische Faser geleitet wird und wobei zur Erzielung eines zweiten Beleuchtungszustandes das Licht der Halogenlampe und der Hochleistungs-Gasentladungslampe zumindest partiell in die optische Faser geleitet wird.

13. Beleuchtungsverfahren nach Anspruch 11 oder 12, bei welchem das licht der beiden Lichtquellen über wenigstens einen Strahlenteiler in die optische Faser geleitet wird.
